# EUROPÄISCHE PATENTSCHRIFT

(11) **EP 1 139 622 B1**
(45) Veröffentlichungstag und Bekanntmachung des Hinweises auf die Patenterteilung: **02.08.2006**
(21) Anmeldenummer: 01440061.8
(22) Anmeldetag: 09.03.2001
(51) Int. Cl.: H04L 25/03, H04L 25/06

(54) **Rückgekoppelter Entzerror, insbesondere für Anwendung bei optischer Übertragung**
Feedback equaliser, particularly for use in optical transmission
Egaliseur récursif, en particulier pour utilisation avec la transmission optique

(30) Priorität: 28.03.2000 DE 10015115
(43) Veröffentlichungstag der Anmeldung: 04.10.2001
(73) Patentinhaber: ALCATEL, 75008 Paris (FR)
(72) Erfinder: Buchali, Fred, Dr., 71336 Waiblingen (DE); Bülow, Henning, Dr., 70806 Kornwestheim (DE)
(74) Vertreter: Rausch, Gabriele

(56) Entgegenhaltungen:
- EP-A- 0 455 910
- DE-A- 19 806 682
- WINTERS J H ET AL: "ELECTRICAL SIGNAL PROCESSING TECHNIQUES IN LONG-HAUL, FIBER-OPTIC SYSTEMS" , INTERNATIONAL CONFERENCE ON COMMUNICATIONS. INCLUDING SUPERCOMM TECHNICAL SESSIONS. ATLANTA, APR. 15 - 19, 1990, NEW YORK, IEEE, US, VOL. VOL. 2, PAGE(S) 397-403 XP000146099 * Zusammenfassung * * I. Introduction * * II. System * * III. A. Linear Equalization * * III. B. Nonlinear Cancellation *
- KAWAS KALEH G: "Zero-forcing decision-feedback equalizer for packet data transmission" , PROCEEDINGS OF THE INTERNATIONAL CONFERENCE ON COMMUNICATIONS (ICC). GENEVA, MAY 23 - 26, 1993, NEW YORK, IEEE, US, VOL. VOL. 3, PAGE(S) 1752-1756 XP010137182 ISBN: 0-7803-0950-2 * das ganze Dokument *
- KASTURIA S ET AL: "Techniques for high-speed implementation of nonlinear cancellation" , IEEE JOURNAL ON SELECTED AREAS IN COMMUNICATIONS, IEEE INC. NEW YORK, US, VOL. 9, NR. 5, PAGE(S) 711-717 XP002179197 ISSN: 0733-8716 * Zusammenfassung * * I. Introduction * * III.A. Avoiding Analog Switching *

## Beschreibung

Die Erfindung geht aus von einem Verfahren zur Rückgewinnung von gestörten digitalen optischen Signalen sowie von einem rückgekoppelten Entscheider nach den Oberbegriffen der unabhängigen Ansprüche.

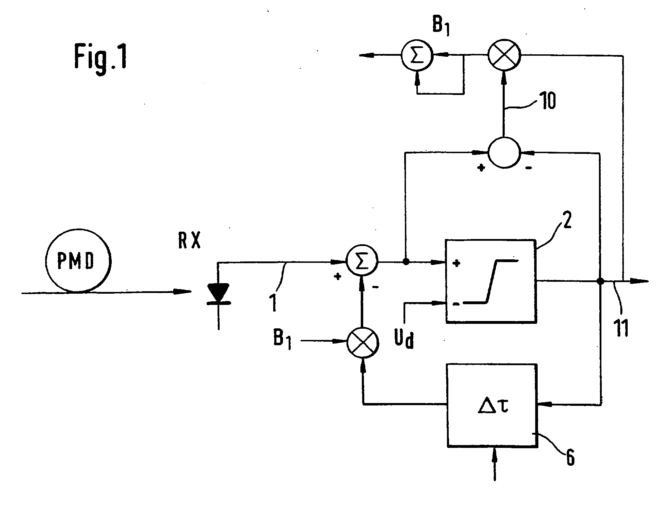

Aus dem Stand der Technik sind Verfahren zur Rückgewinnung von stark gestörten digitalen optischen Signalen sowie rückgekoppelte Equalizer (DFE Decision Feedback Equalizer) bekannt. Beispielsweise wird in der Veröffentlichung "Equalization auf Bit Distortion Induced by Polarisation Mode Dispersion", H. Bülow, NOC 97, Antwerp 1997, Seite 65 bis 72, mehrere Möglichkeiten zur Kompensation von Dispersion auch mit Hilfe von Equalizern vorgestellt. Einen aus dem Stand der Technik bekannten Equalizer zeigt Figur 1. Ein gestörtes optisches übertragenes Signal wird in einem optisch-elektrischen Wandler in ein gestörtes elektrisches Signal 1 gewandelt. Das gestörte Signal liegt an einem Schwellwertentscheider 2 an. Ausgehend vom Ausgang des Schwellwertentscheiders 2 wird das entschiedene Signal 11 über ein Verzögerungsglied 6 rückgekoppelt. Über einen Multiplikator wird das rückgekoppelte, zeitverzögerte Signal mit einem Parameter B1 multipliziert und auf ein Summationsglied gegeben. Um dem Parameter B1 zu erhalten wird im Stand der Technik ein analoges Regelungsverfahren angewendet. Es wird ein Signal sowohl eingangsseitig vor dem Schwellwertentscheider und ausgangsseitig nach dem Schwellwertentscheider 2 abgegriffen. Die Subtraktion dieser beiden Signale ergibt ein Fehlersignal 10, das mit dem entschiedenen Signal 11 multipliziert den Parameter b1 ergibt. Ein solches analoges Regelungsverfahren reagiert sehr schnell auf Änderungen des optischen Signals. Ein solcher Regelkreis passt sich extrem schnell an die Gegebenheiten der Übertragungsstrecke und Störungen durch Dispersionseffekte an. Vorteilhaft ist die Verwendung des Zero Forcing Algorithmus wie er beispielsweise von G. KAWAS KALEH in "Zero-forcing decision-feedback equalizer for packet data transmission", Proceedings of ICC, pp. 1762-6, Geneva, May 1993, beschrieben wird.

Allerdings ist der aus Figur 1 bekannte DFE auf der Basis der derzeit verfügbaren Halbleiterschaltungen nicht in der Lage Datenraten oberhalb von 10 Gbit/s zu verarbeiten. Bei solchen hohen Datenraten beginnen die Laufzeitunterschiede der Signale in der Rückkopplungsschleife bereits eine Rolle zu spielen. Daher werden im Stand der Technik alternative Entscheiderschaltungen verwendet.

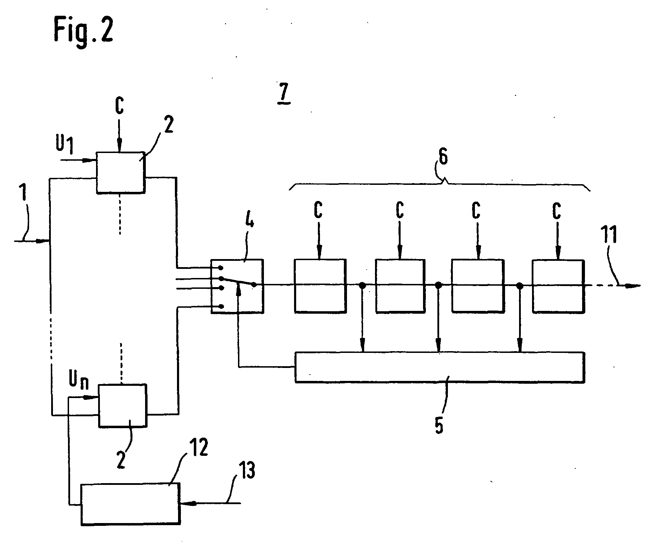

Beispielsweise werden in der deutschen Offenlegungsschrift DE 197 47 249 Schaltungen beschrieben, die parallele Schwellwertentscheider verwenden. Durch die Aufspaltung der gesamten Datenrate in parallele Datenströme wird das Zeitproblem in der Entscheiderschaltung reduziert. Als Beispiel wird eine Schaltung, wie in Figur 2 beschrieben, vorgestellt. Das Eingangssignal wird hier auf mehrere Entscheider 2 aufgeteilt. Die Entscheider weisen jeweils einen Schwellwerteingang U1 bis Un auf, der von einem digitalen Prozessor 12 extern geregelt wird. Die Ausgänge der Entscheider liegen an einem Multiplexer 4 an, der von einer Logikeinheit 5 beschaltet wird. Die Logikeinheit 5 wertet die Ausgänge einzelner Flip-Flop 7 der Verzögerungslogik 6 aus, um den Multiplexer zu beschalten. Ein solcher Aufbau für eine Entscheiderschaltung löst Laufzeitprobleme bei hohen Datenraten. Allerdings steht bei dieser Entscheiderschaltung kein Differenzsignal zwischen gestörtem Eingangssignal 1 und rückgekoppeltem Signal zur Erzeugung des Fehlersignals 10 zur Verfügung.

Aus der Druckschrift EP 0455910A2 ist ein rückgekoppelter Entscheider bekannt, der ebenfalls durch Parallelisieren hohe Datenraten verarbeiten kann.

Allerdings ist der DFE nicht in der Lage stark gestörie Signale zu verarbeiten, da er mit den nicht entschiedenen Signalen für die Rückkopplung arbeifet.

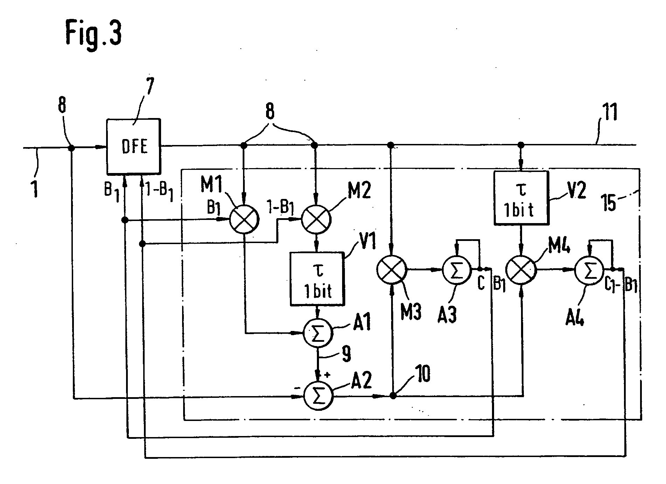

Es ist daher Aufgabe der Erfindung eine Schaltung vorzuschlagen, mit der es möglich ist, Entscheiderschaltungen mit parallel geschalteten Schwellwertentscheidern zu verwenden und gleichzeitig die Vorteile einer analogen Regelung der Einstellparameter zu verbinden.
Das erfindungsgemäße Verfahren zu Rückgewinnung von stark gestörten digitalen optischen Signalen hat den Vorteil, dass die Schnelligkeit einer parallelen Schaltung von Schwellwertentscheidern in einem DFE mit der einfachen und schnellen Adaption der Regelgrößen durch einen analogen Regelkreis verbunden wird. Weiterhin ist es von Vorteil einen Pseudo-Error-Monitor zu integrieren, der es erlaubt die Entscheiderschwellen im Equalizer aufgrund der Güte des Signals zu beurteilen und nachzuführen. Der erfindungsgemäße rückgekoppelte Equalizer hat weiterhin den Vorteil, dass ein synthetisches dispersives Signal erzeugt wird, mit dessen Hilfe eine analoge Regelung zur Bestimmung der Parameter möglich ist.
Die Integration des Pseudo-Error -Monitors verbessert den Equalizer, so dass die Entscheiderschwellen aufgrund der Auswertung des Pseudo-Errors nachgeführt und an die aktuellen Gegebenheiten der Übertragungsstrecke angepasst werden können.
Ein Ausführungsbeispiel der Erfindung ist in der Figur 3 dargestellt und in der nachfolgenden Beschreibung näher erläutert.
Es zeigt:
- Figur 1:: analoge Rückkopplung nach Stand der Technik,
- Figur 2:: parallele Entscheiderschaltung nach Stand der Technik, sowie
- Figur 3:: ein Ausführungsbeispiel des erfindungsgemäßen Equalizers
- Figur4:: eine Kombination mit einem linearen Equalizer.
- Figur 5: Equalizer mit Pseudo-Error-Monitor.

In Figur 3 sind die Hauptbestandteile des erfindungsgemäßen Equalizers dargestellt. Ein elektrisches gesförtes Signal 1 liegt an einem DFE 7 an. In diesem Ausführungsbeispiel wird ein DFE mit zwei Schwellwertentscheidern eingesetzt, der zwei Einstellparameter benötigt. Der Ausgang des DFE 7 liefert ein entschiedenes Signal 11. In einem gestrichelten Rahmen dargestellt ist eine analoge Kontrolle 15. Diese analoge Kontrolle 15 liefert eingangsseitig am DFE Einstellparameter B1 und 1-B1. Um die analoge Kontrolle - wie sie im Stand der Technik und in Figur 1 beschrieben istdurchzuführen wird in der erfindungsgemäßen Schaltung ein Addierer A2, ein Multiplizierer M3 sowie ein Addierer A3, sowie ein Multiplizierer M4 und ein Addierer A4 verwendet. Als Eingangssignal für den Addierer A2 dient ein synthetisches dispersives Signal 9 sowie das gestörte elektrische Signal 1. Das synthetische dispersive Signal 9 wird erzeugt, indem das entschiedene Signal 11 sowie die rückgekoppelten Einstellungsparameter B1 und 1-B1 abgegriffen werden. Dabei wird der erste Parameter B1 mit dem entschiedenen Signal 11 im Multiplizierer M1 multipliziert, der zweite Parameter 1-B1 in einem zweiten Multiplizierer M2 ebenfalls mit dem entschiedenen Signal 11. Das multiplizierte Signal des Multiplizierers M2 wird über ein Verzögerungsglied V1 um 1 Bit verzögert. Die Resultate des Multiplizierers M1 sowie des zeitverzögerten Signals des Multiplizierers M2 werden in einem Addierer A1 addiert. Mit dieser Vorgehensweise wird ein synthetisches dispersives Signal 9 erzeugt, das auf dem entschiedenen Signal sowie auf einer Abschätzung der Dispersionseffekte aufgrund der Signal- und der Echoamplituden des Eingangssignals basiert. Im Addierer A2 wird das gestörte Signal 1 vom synthetischen dispersiven Signal 9 abgezogen. Als Ergebnis liegt ein Fehlersignal 10 vor. Der Ausgang des Addierers A2 ist sowohl mit einem Multiplizierer M3 als auch mit einem Multiplizierer M4 verbunden. Im Multiplizierer M3 wird das Fehlersignal mit dem entschiedenen Signal multipliziert. Das Ergebnis dieser Multiplikation liegt an einem Addierer A3 an. Der Addierer A3 bestimmt den Einstellparameter B1 zur Rückkopplung in den DFE 7. Der zweite Einstellparameter 1-B1 wird erzeugt durch Multiplikation des Fehlersignals 10 mit einem um 1 Bit zeitverzögerten entschiedenen Signal 11. Auch hier durchläuft das Ergebnis des Multiplizierers M4 einen Addierer A4, der den Parameter 1-B1 bestimmt. Mit dieser Schaltung wird ein Optimum erreicht, wenn die Ausgänge der Addierer A3 und A4 jeweils 0 sind.

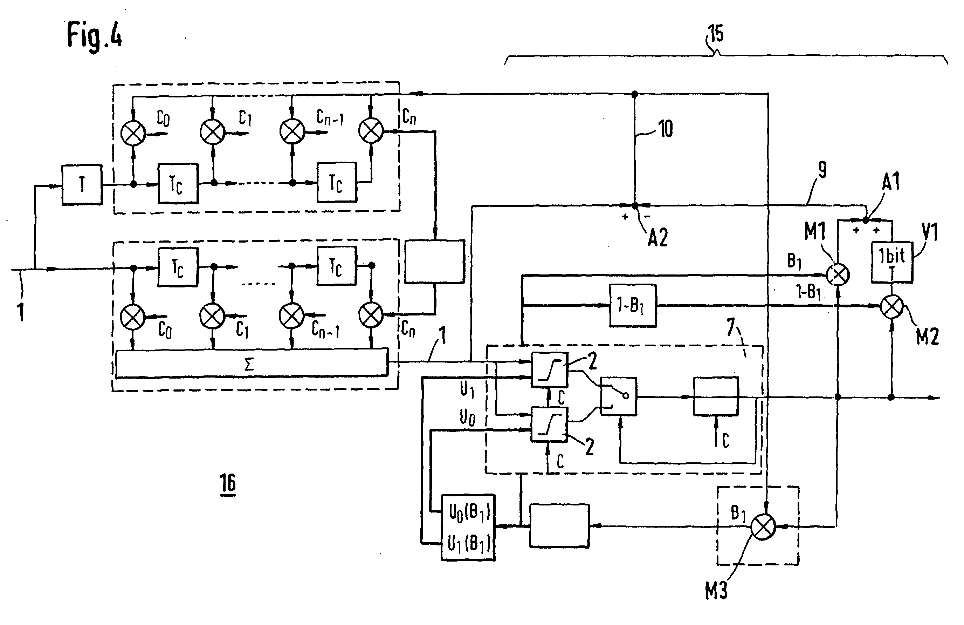

Figur 4 zeigt die Schaltung aus Figur 3 bestehend aus DFE 7 und analoger Kontrolle 15. Die Darstellung ist dabei unterschiedlich gewählt. Das Fehlersignal 10, das durch Verwendung von gestörtem Signal 1 und synthetischem dispersiven Signal 9 entsteht, dient zur Ansteuerung eines linearen Equalizers 16.
Eine ausführliche Beschreibung eines linearen Equalizers, der beispielhaft die Kombination eingesetzt werden kann, ist in der deutschen Veröffentlichung DE 19936254 zu finden. Hier wird das Prinzip der Korrelation der Signalanteile mit Multiplikatoren, Verzögerungsglieder und Summation beschrieben.

Die Schaltung für die analoge Kontrolle 15 zeigt dabei nur die Ableitung des Parameters B1, nicht des Parameters 1-B1. Dieser Parameter wird wie in Figur 3 gezeigt abgeleitet.

Die Kombination mit einem linearen Equalizer 16 hat in einer weiteren Ausführungsform den Vorteil, dass der zweite Parameter 1-B1 nicht wie in Figur 3 ermittelt werden muss. Idealerweise normiert der Einsatz eines linearen Equalizers die Signalamplitude auf 1. Dadurch kann der zweite Parameter 1-B1 einfach durch Subtraktion ermittelt werden.
Auf die genaue Ausführungsform des linearen Filters kommt dabei nicht an. Wichtig ist dabei lediglich, dass eine Normierung der Signalamplitude auf 1 erfolgt und somit die analoge Kontrolle 15 einfacher ausgebildet werden kann.

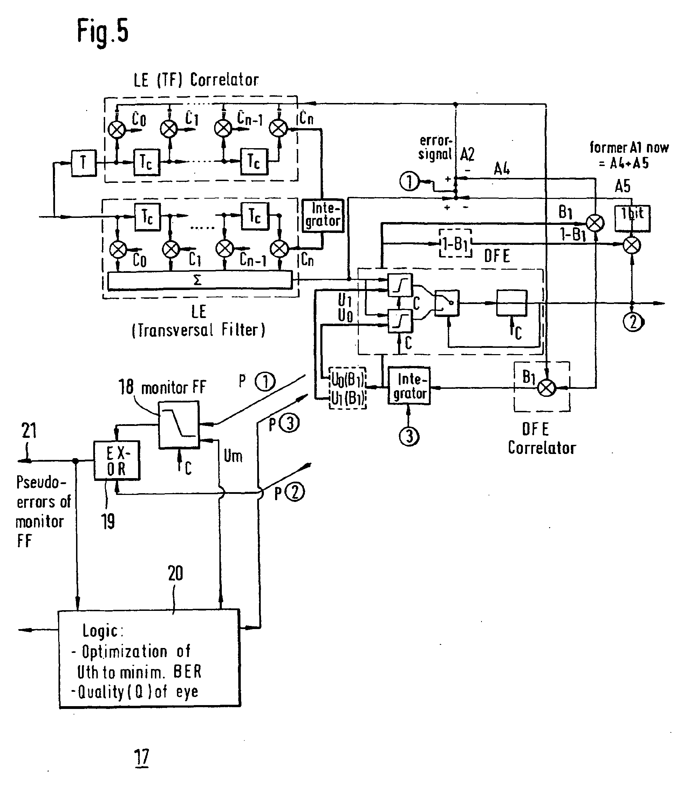

Figur 5 zeigt einen Aufbau eines Equalizers mit "analoger" Regelung erweitert um einen Pseudo-Error-Monitor. Als Eingangssignale für den Monitor 17 dienen das Signal P1, das das gestörte optische Signal nach dem linearen Equalizer ist und das Signal P2, das das entschiedene Signal ist. In einem Monitorentscheider 18 wird das gestörte Signal mit einem variablen Schwellwert Uₘ entscheiden. Das Resultat wird in einer EXOR-Schaltung 19 mit dem entschiedenen Signal P2 verglichen. Daraus resultiert ein Pseudo-Error-Signal 21. Das Pseudo-Error-Signal 21 wird in einer Logik-Schaltung 20 analysiert und dient zur Anpassung der Entscheiderschwellen des Equalizers mit den Einstellparametern B1 und 1-B1. Die Logik-Schaltung 20 bestimmt auch die Qualität der Augenöffnung als Maß für die Qualität der Signalrückgewinnung.

Ein solcher Pseudo-Error-Monitor lässt sich auch für andere Ausführungen von Equalizern einsetzen.

## Patentansprüche

1. Verfahren zur Rückgewinnung von gestörten digitalen optischen Signalen
wobei die gestörten optischen Signale optisch-elektrisch gewandelt werden,
die resultierenden, elektrischen, gestörten Signale (1) einen rückgekoppelten Entscheider (7) mit mindestens zwei parallel geschaltete Schwellwertentscheidern (2) durchlaufen, **dadurch gekennzeichnet, dass**
die entschiedenen Signale (11) und eine geschätzte Dispersion als Basis zur Synthetisierung von synthetischen dispersiven Signalen (9) verwendet werden,
die gestörten Signale (1) und die synthetischen dispersiven Signale (9) zur Erzeugung eines Fehlersignals (10) verwendet werden,
und das Fehlersignal (10) zur Ableitung der Einstellparameter (B1, 1-B1) zur Einstellung der Schwellwertentscheider (2) verwendet wird.

2. Verfahren nach Anspruch 1, **dadurch gekennzeichnet, dass** die analoge Kontrolle (15) das Fehlersignal (10) nach einem analogen Verfahren ermittelt.

3. Verfahren nach Anspruch 1, **dadurch gekennzeichnet, dass** die analoge Kontrolle (15) unter Verwendung des Zero-Forcing-Algorithmus arbeitet.

4. Verfahren nach Anspruch 1, **dadurch gekennzeichnet, dass** ein Pseudo-Error-Monitor (17) das gestörte optische Signal (1) mit dem entschiedenen Signal vergleicht und daraus einen Pseudofehler ermittelt.

5. Rückgekoppelter Entscheider (7) mit einem Eingang für optisch übertragene, in elektronische Signale rückgewandelte Daten mit mindestens zwei parallel geschalteten Schwellwertentscheidern (2) und einer analogen Kontrolle (15) zur Ermittlung von Einstellparameter (B1, 1-B1) für die Schwellwertentscheider (2),**dadurch gekennzeichnet, dass** Abgriffe (8) zur Ableitung des gestörten Signals (1) und des entschiedenen Signals (11) vorhanden sind und **dass** die analoge Kontrolle (15) eine Schaltung (M1, M2, V1) zur Ermittlung eines synthetischen dispersiven Signals (9) enthält und **dass** das synthetische dispersive Signal (9) und das gestörte Signal (1) einer Schaltung (A2) zur Ermittlung eines Fehlersignals (10) dient und einer Schaltung (M3, A3, M4, A4) zur Bestimmung mindestens zweier Einstellparameter (B1,1-B1) zugeführt wird.

6. Rückgekoppelter Entscheider (7) mit analoger Kontrolle (15) nach Anspruch 5, **dadurch gekennzeichnet, dass** der rückgekoppelte Entscheider (7) mit analoger Kontrolle (15) mit einem linearen Equalizer (16) verbunden ist.

7. Rückgekoppelter Entscheider nach Anspruch 6, **dadurch gekennzeichnet, dass** der lineare Equalizer (16) die Signalamplitude auf 1 normiert und die analoge Kontrolle (15) auf die Ableitung des Parameters B1 reduziert ist.

8. Rückgekoppelter Entscheider nach Anspruch 5 mit einem Pseudo-Error-Monitor (17) bestehend aus einem Monitorentscheider (18) einer EXOR-Schaltung (19) und einer Logikschaltung (20).

## Claims

1. Process for recovering disturbed, digital optical signals
wherein the disturbed optical signals are opto-electrically converted,
the resulting electrical, disturbed signals (1) pass through a feedback decision circuit (7) comprising at least two parallel-connected threshold decision elements (2), **characterised in that**
the decided signals (11) and an estimated dispersion are used as the basis for the synthesisation of synthetic, dispersive signals (9),
the disturbed signals (1) and the synthetic, dispersive signals (9) are used to generate an error signal (10),
and the error signal (10) is used to derive the setting parameters (B1, 1-B1) for setting the threshold decision elements (2).

2. Process according to Claim 1, **characterised in that** the analogue control stage (15) determines the error signal (10) in accordance with an analogue process.

3. Process according to Claim 1, **characterised in that** the analogue control stage (15) operates using the zero-forcing algorithm.

4. Process according to Claim 1, **characterised in that** a pseudo-error monitor (17) compares the disturbed optical signal (1) with the decided signal and determines a pseudo-error therefrom.

5. Feedback decision circuit (7) with an input for optically transmitted data reconverted into electronic signals, with at least two parallel-connected threshold decision elements (2), and with an analogue control stage (15) for determining setting parameters (B1, 1-B1) for the threshold decision elements (2),
**characterised in that** tappings (8) are provided for deriving the disturbed signal (1) and the decided signal (11) and that the analogue control stage (15) contains a circuit (M1, M2, V1) for determining a synthetic, dispersive signal (9), and that the synthetic dispersive signal (9) and the disturbed signal (1) serve a circuit (A2) for determining an error signal (10) and are fed to a circuit (M3, A3, M4, A4) for determining at least two setting parameters (B1, 1-B1).

6. Feedback decision circuit (7) with an analogue control stage (15) according to Claim 5, **characterised in that** the feedback decision circuit (7) with analogue control stage (15) is connected to a linear equalizer (16).

7. Feedback decision circuit according to Claim 6, **characterised in that** the linear equalizer (16) standardizes the signal amplitude to 1 and the analogue control stage (15) is reduced to the derivation of the parameter B1.

8. Feedback decision circuit according to Claim 5 with a pseudo-error monitor (17) consisting of a monitor decision element (18), an EXOR-circuit (19) and a logic circuit (20).

## Revendications

1. Procédé de récupération des signaux optiques numériques perturbés, les signaux optiques perturbés étant convertis de manière opto-électrique, les signaux électriques perturbés (1) résultants passant dans un dispositif de décision à contre-réaction (7) comprenant au moins deux dispositifs de décision à valeur de seuil (2) branchés en parallèle, **caractérisé en ce** les signaux résultant de la décision (11) et une dispersion estimée sont utilisés comme base pour synthétiser des signaux dispersifs synthétiques (9), les signaux perturbés (1) et les signaux dispersifs synthétiques (9) sont utilisés pour générer un signal de défaut (10) et le signal de défaut (10) est utilisé pour dériver les paramètres de réglage (B1, 1-B1) en vue de régler les dispositifs de décision à valeur de seuil (2).

2. Procédé selon la revendication 1, **caractérisé en ce que** le contrôle analogique (15) détermine le signal de défaut (10) d'après un procédé analogique.

3. Procédé selon la revendication 1, **caractérisé en ce que** le contrôle analogique (15) fonctionne en utilisant un algorithme de forçage à zéro.

4. Procédé selon la revendication 1, **caractérisé en ce qu'**un moniteur de pseudo-errcur (17) compare le signal optique perturbé (1) avec le signal résultant de la décision et détermine à partir de cela une pseudo-erreur.

5. Dispositif de décision à contre-reaction (7) comprenant une entrée pour des données transmises de manière optique et reconverties en signaux électroniques comprenant au moins deux dispositifs de décision à valeur de seuil (2) branchés en parallèle et un contrôle analogique (15) pour déterminer les paramètres de réglage (B1, 1-B1) pour les dispositifs de décision à valeur de seuil (2), **caractérisé en ce qu'**il existe des prises (B) pour dériver le signal perturbé (1) et le signal résultant de la décision (11) et que le contrôle analogique (15) comprend un circuit (M1, M2, V1) pour déterminer un signal dispersif synthétique (9) et le signal dispersif synthétique (9) ainsi que le signal perturbé (1) sont acheminés à un circuit (A2) servant à déterminer un signal de défaut (10) et à un circuit (M3, A3, M4, A4) destiné à déterminer au moins deux paramètres de réglage (B1, 1-B1).

6. Dispositif de décision à contre-réaction (7) avec contrôle analogique (15) selon la revendication 5, **caractérisé en ce que** le dispositif de décision à contre-réaction (7) avec contrôle analogique (15) est relié à un égaliseur linéaire (16).

7. Dispositif de décision à contre-réaction selon la revendication 6, **caractérisé en ce que** l'égaliseur linéaire (16) normalise l'amplitude du signal à 1 et le contrôle analogique (15) est réduit à dériver le paramètre B1.

8. Dispositif de décision à contre-réaction selon la revendication 5, comprenant un moniteur de pseudo-erreur (17) composé d'un dispositif de décision à moniteur (18), un circuit EXOR (19) et un circuit logique (20).
